# EUROPEAN PATENT APPLICATION

(11) **EP 1 331 045 A2**
(43) Date of publication of application: **30.07.2003**
(21) Application number: 02028046.7
(22) Date of filing: 16.12.2002
(51) Int. Cl.: B07B 4/02

(54) **Sorting method and apparatus for breaking up forage plants, particularly alfalfa, into their components and product obtainable therewith**

(30) Priority: 14.12.2001 IT MI20012651
(71) Applicant: Alfagreen S.r.l., 30123 Venezia (IT)
(72) Inventor: Manzolli, Giuseppe Imo, 30123 Venezia (IT)
(74) Representative: Modiano, Guido, Dr.-Ing.

(57) **Abstract**

The present invention relates to a sorting method and apparatus for breaking up forage plants, particularly alfalfa, into their component parts, and a product for zootechnical feeding that can be obtained with the method, the method comprising a step of calibrated shredding of the forage plants in order to divide the forage plants into fragments of preset length, which are substantially composed of a component part (stalks or leaves) of the plants or two or more component parts of the plants (stalks and leaves). These fragments are then subjected to a first step of pneumatic sorting in order to break them up into separate sorting fractions that differ according to their grammage. At least one of the sorting fractions produced by the first sorting step and containing fragments that have an intermediate grammage as well as fragments that have grammages other than the intermediate grammage is subjected to a second pneumatic sorting step in order to break up the sorting fraction into the parts that compose it with sorting parameters that can be diversified with respect to the sorting parameters used in the first sorting step.

## Description

The invention relates to a sorting method and apparatus for breaking up forage plants, particularly alfalfa (Medicago sativa), into their components, and to a product for zootechnical feeding obtainable with the method.

In recent years, the trade of alfalfa has experienced a growing crisis mainly due to the fact that the market requires, for zootechnical feeding, products that are increasingly specific and balanced and that only the most highly specialized fodder industry is capable of producing.

For this reason, the market for alfalfa, based almost exclusively on the dehydration of the cut product, has gradually lost considerable market share.

Moreover, the costs for managing the dehydration facilities, among which the cost of conventional fuels of the fossil type is one of the most important items, have been gradually increasing, and so have the costs required to reduce the polluting emissions of these facilities.

These economical difficulties are in practice limiting the use of a vegetable product that is not only excellent as zootechnical fodder but also as a source of high-value substances that can also be used in human nutrition or for other requirements.

In order to economically enhance the utilization of this product, patent no. 1,275,556 discloses a method that provides for the dehydration of alfalfa and for its breakup into the various parts that compose the alfalfa plant, so as to no longer obtain an undifferentiated average product but obtain various products having a more or less rich content of proteins and vitamins in relation to the content of fiber, which can be used as a valid alternative to fodders.

Patent no. 1,298,266 discloses a method and an apparatus that are designed to break up forage plants, particularly alfalfa plants, into their component parts, in order to obtain products for zootechnical feeding. This patent describes a particular technique of pneumatic separation, or rather pneumatic sorting, that allows to separate and collect the various components of the alfalfa plant, grouped according to their different mass/surface ratio, which, to use a term that is common in the field of papermaking, is termed hereinafter "grammage". By way of this technique it is possible to separate the stalks, which constitute the component with the highest fiber content, from the leaves, which instead constitute the component with the highest content of proteins, vitamins, and other high-value substances, in order to treat separately these two components in the production of zootechnical fodders or other products.

Patent application MI99A-000733 discloses a method aimed at utilizing the nutritional and/or chemical-organic and/or pharmaceutical and/or herbal and/or cosmetic and/or energetic potential of vegetable agricultural products, particularly forages such as alfalfa or the like. This process, too, is based on breaking up the forage plant, particularly alfalfa, into its various components in order to then subject these components to specific treatments according to the final product to be obtained.

In particular, this patent application teaches to subject the forage to calibrate shredding before subjecting it to pneumatic sorting in order to achieve, by precise parting, the optimum breakup of the forage plant into its component parts, which are then separated from each other by means of the pneumatic sorting technique.

Substantially, the patents cited above show that the possibility to break up a forage plant, particularly alfalfa, into its various components allows to manage and treat separately the various components in order to obtain, in an economically convenient manner, zootechnical fodders or other products.

In the practical testing of pneumatic sorting machines of the type disclosed in patent no. 1,298,266 to separate the various components of forage plants, particularly alfalfa, previously dehydrated and cut into fragments of preset length, it has been found that very often the precision of the sorting is not fully satisfactory.

In a pneumatic sorting machine of the type shown in patent no. 1,298,266, which substantially consists of a tunnel in which a substantially horizontal stream of air is produced and in which the products to be sorted are allowed to fall from above, so that the various products introduced in the sorting machine fall at a distance from the input point that is inversely proportional to their grammage, a considerable quantity of fragments constituted by stalks (which have a higher grammage) and by leaves (which have a lower grammage), collects, together with fragments having intermediate grammages, in the receptacles of the pneumatic sorting machine intended for said fragments having an intermediate grammage.

This error in sorting the fragments is explained theoretically by the fact that following random interactions among the elements being sorted, some of the lighter elements, during pneumatic sorting performed by means of a horizontal stream of air, can propel heavier elements. In this manner, the heavier elements that are propelled are made to fall further from the input point with respect to the falling point that they should have in theory according to their grammage, while the "propelling" lighter elements are braked by said heavier elements and fall closer to the input point than they should in theory according to their grammage.

If the product being sorted is constituted by alfalfa, leaves (having a smaller grammage) and large stalks (having a higher grammage) are collected together with the thin stalk fraction.

To obviate these entirely random errors, patent no. 1,298,266 suggests to return any components that are sorted unsatisfactorily to the tunnel together with the products that have not yet been sorted.

Since there is a tendency to increase the flow-rate of product introduced in the sorting machine in order to increase the productivity of these facilities, the interactions between the components of the product that have different grammages are considerable, and accordingly the quantity of product that must be sorted again is considerable.

If one wishes to reach high productivities, in order to reduce the management costs of these machines the quantity of product that is returned to the sorting machine can be such as to rapidly clog the machine.

The aim of the present invention is to solve the problems noted above by providing a sorting method and apparatus that allow to break up forage plants, particularly alfalfa, into their component parts, in a precise and financially convenient manner.

Within this aim, an object of the invention is to provide a sorting method and apparatus which, by performing precise sorting of the various components of the forage, particularly alfalfa, allow to treat successively the various components separately in order to produce, in particular, highly specific natural zootechnical products that are competitive with the products of the fodder industry.

Another object of the invention is to provide a product, derived from the breakup performed by means of the sorting method and apparatus according to the invention, that can be used, even without further treatments, to feed some animal species.

This aim and these and other objects that will become better apparent hereinafter are achieved by a method for breaking up forage plants, particularly alfalfa, into their component parts, characterized in that it comprises:
-- a step for calibrated shredding of the forage plants in order to divide the forage plants into fragments of preset length, which are substantially composed of a component part (stalks or leaves) of the plants or two or more component parts of the plants (stalks and leaves);
-- a first step of pneumatic sorting for breaking up said fragments, and any parts that separate from them, into separate sorting fractions that differ according to their grammage;
-- a second step of pneumatic sorting, in which at least one of the sorting fractions produced by said first sorting step and containing fragments that have an intermediate grammage as well as fragments that have grammages other than said intermediate grammage, is subjected to pneumatic sorting in order to break up said sorting fraction into the parts that compose it with sorting parameters that can be diversified with respect to the sorting parameters used in said first sorting step.

In order to carry out the method according to the invention, a pneumatic sorting machine is preferably used which comprises a substantially horizontal tunnel that has, in an upward region, at least one opening for introducing the forage in fragments having a calibrated length and, in a downward region, a bottom in which there are multiple receptacles for collecting the sorting fractions of the forage fragments introduced in said tunnel, means for dispensing a stream of air in a substantially horizontal direction along said tunnel below said insertion opening in order to make the forage fragments fall into said receptacles in a manner that is differentiated according to their grammage, said receptacles being spaced one another along a direction that is substantially parallel to the direction of said air stream, characterized in that the region of said tunnel that is located above said receptacles is divided into at least two sections, which are arranged side by side along the direction of said air stream, respectively a first sorting section and a second sorting section, each one of said two sections being provided with a corresponding inlet, at least one of said receptacles being divided into at least two parts, respectively at least one first part arranged below said first sorting section and at least one second part arranged below said second sorting section; the first part of said at least one receptacle being connected to the inlet of said second sorting section, in order to convey into said second sorting section the forage fraction that collects in said first part of the receptacle.

Further characteristics and advantages of the invention will become better apparent from the description of a preferred but not exclusive embodiment of the sorting method and apparatus according to the invention, illustrated only by way of non-limitative example in the accompanying drawings, wherein:
Figure 1 is a schematic sectional view of the sorting apparatus according to the invention, taken along a vertical plane that is parallel to its longitudinal extension and is designated by I-I in Figure 2;
Figure 2 is a schematic sectional view of the sorting apparatus of Figure 1, taken along the line II-II.

The method according to the invention comprises a step for calibrated shredding of the forage plants, particularly alfalfa, into fragments of preset length, said length being preferably equal to three times the average width of the leaves of said forage plant.

In this manner, the fragments into which the forage plants are divided are composed substantially completely of a single component of the plant, i.e., stalks or leaves, or two components of the plant, i.e., stems and leaves.

Before or after calibrated shredding, the forage is preferably subjected to dehydration.

The forage fragments, and optionally any parts of the plant that separate from them, are subjected to a first pneumatic sorting step in order to break them up into sorting fractions that differ according to their grammage.

After this first step of pneumatic sorting, at least one of the sorting fractions produced by this first step, which contains plant fragments that have an intermediate grammage and plant fragments that have a different grammage with respect to said intermediate grammage, is subjected to a second pneumatic sorting step, in order to break up said sorting fraction into the components of different grammage that compose it. This second sorting step can be performed with sorting parameters that differ from those used in the first sorting step, so as to achieve a precision in the separation of the parts that compose the processed sorting fraction that is higher than the precision that can be obtained in the first sorting step, since said sorting fraction is treated separately from the forage that is subjected to sorting for the first time.

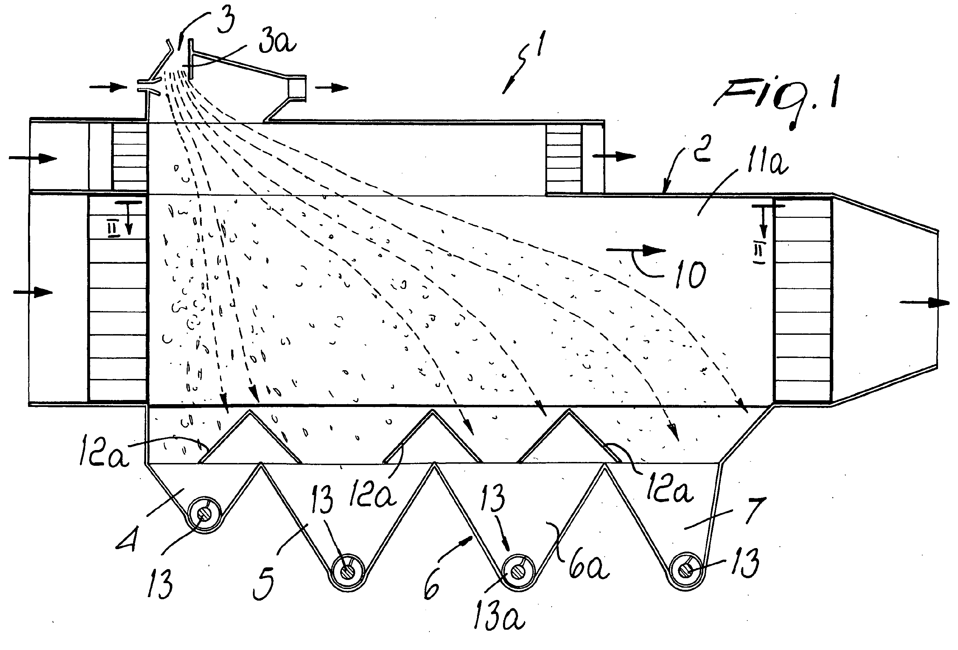

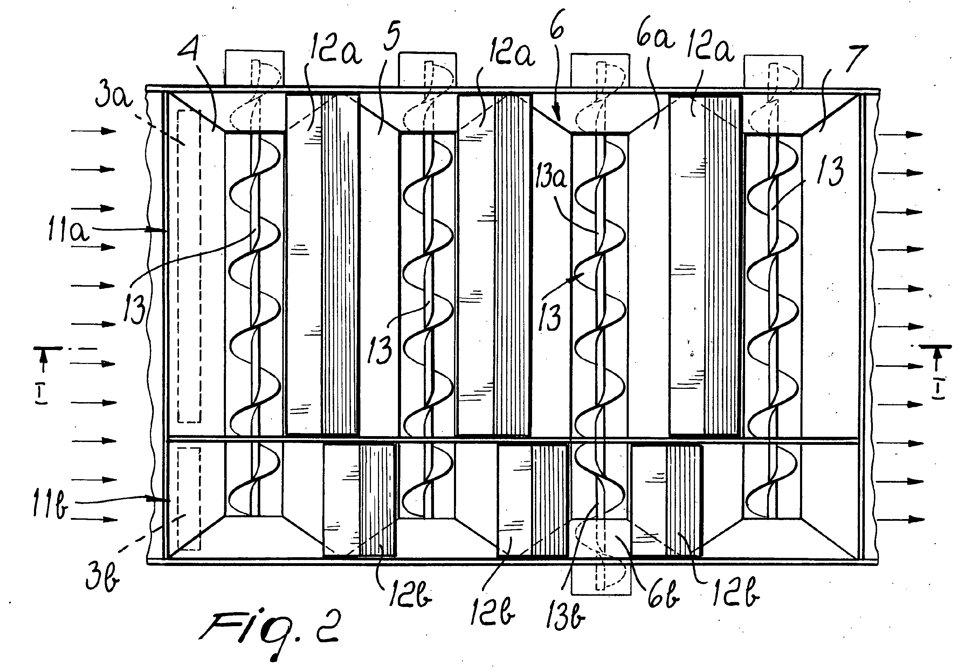

The first and second sorting steps of the method according to the invention are performed in a sorting apparatus of the type shown schematically in Figures 1 and 2 and generally designated by the reference numeral 1.

The sorting apparatus 1 comprises a substantially horizontal tunnel 2 that has, in an upward region, at least one inlet 3 for the fragments of forage having a preset length.

In a downward region, the tunnel 2 has a bottom in which there are multiple receptacles 4, 5, 6 and 7 for the sorting fractions to be obtained from the breakup of the forage fragments according to their grammage.

The sorting apparatus 1 furthermore comprises means for dispensing a stream of air along a substantially horizontal direction 10 in the tunnel 2 below the inlet 3, so as to make the forage fragments introduced through the inlet 3 fall in a differentiated manner into the receptacles 4-7, which are spaced one another parallel to the direction 10.

According to the invention, the region of the tunnel 2 that lies above the receptacles 4-7 is divided into at least two sections, respectively a first sorting section 11a and a second sorting section 11b, which are arranged side by side parallel to the direction 10. Each one of these two sections 11a and 11b is provided with a corresponding inlet 3a and 3b, an at least one of the receptacles 4-7, the receptacle 6 in the case shown, is divided into at least two parts, respectively at least one first part 6a arranged below the first sorting section 11a and a second part 6b arranged below the second sorting section 11b. The first part 6a of the receptacle 6 is connected to the inlet 3b of the second sorting section 11b in order to convey the forage fraction that collects in the first part 6a of the receptacle 6, following the sorting performed in the first sorting section 11a, into the second sorting section 11b, so that said fraction is subjected to another pneumatic sorting operation, so that its components are separated according to their grammage.

Baffles 12a and 12b are arranged between the receptacles 4-7 and are preferably V-shaped, with the vertex directed upward. Said baffles 12a and 12b delimit the inlet of the receptacles 4-7 and can be moved on command parallel to the direction 10, so as to vary the position of the inlet of each individual receptacle 4-7 with respect to the inlet 3a and 3b of the corresponding sorting section 11a and 11b.

Preferably, the baffles 12a, arranged below the first sorting section 11a, are separate with respect to the baffles 12b arranged below the second sorting section 11b, and the baffles 12a can be moved along the direction 10 independently of the baffles 12b.

Screw feeders 13 for extracting the sorting fractions collected inside the receptacles 4-7 are arranged on the bottom of said receptacles.

At least the screw feeder that is arranged in the receptacle 6 is divided into two parts 13a and 13b: respectively, a part 13a, which is arranged in the part 6a of the receptacle 6 located below the first sorting section 11a, and a part 13b, which is arranged in the part 6b of the receptacle 6 located below the second sorting section 11b. The parts 13a and 13b of the screw feeder have opposite helixes, so that the rotary actuation of the screw feeder about its own axis moves away the sorting fractions that collect in the parts 6a and 6b of the receptacle 6 in two opposite directions.

As regards the means for generating and regulating the flow of air along the tunnel 2, it is possible to use the same elements described and illustrated in patent no. 1,298,266, which is assumed included herein by reference, optionally with the possibility to adjust the speed of the air in the two sorting sections 11a and 11b in a differentiated manner, preferably keeping a lower speed in the second sorting section 11b.

Merely by way of example, in the first sorting section it is possible to have for example an air stream with a speed of 4 m/s, while in the second sorting section 11b one can have an air stream with a speed of 3 m/s.

Operation of the sorting apparatus in carrying out the method according to the invention is as follows.

The fragments of forage of preset length are inserted through the inlet 3a into the first sorting section 11a of the tunnel 2, where they are affected by the action of the air stream that moves along the horizontal direction 10.

By way of the action of this air stream, the forage fragments are conveyed along the direction 10 and fall by gravity toward the bottom of the tunnel 2. The combined action of gravity and of the entrainment performed by the air stream causes the fragments that have the highest grammage to fall into the receptacle 4 that lies closest to the inlet 3a, while the forage fragments that have the lowest grammage fall into the furthest receptacle 7.

If the forage is constituted by alfalfa, the grammage of the fragments can vary from 100 g/m² to 3000 g/m².

One or more of the intermediate receptacles, particularly the receptacle 6, collects, in addition to the sorting fraction that theoretically must fall into said receptacle due to its grammage, parts of the forage plant which, due to their grammage, should fall into receptacles arranged before or after the receptacle 6, in the direction 10, but fall into the receptacle 6 because they are propelled by parts having a smaller grammage or are held by parts that have a greater grammage.

This sorting fraction, which collects in the part 6a of the receptacle 6, is introduced, through the inlet 3b, into the second sorting section 11b and sorted pneumatically again.

In the second sorting section 11b, this fraction, in the same manner explained with reference to the first sorting section 11a, is separated into the various fractions that compose it according to their grammage.

The passage in the second sorting section 11b allows to obviate at least partially the errors arising from the sorting performed in the first sorting section 11a and therefore allows to recover, in the receptacles 4, 5 and 7, the fractions mixed incorrectly with the fraction correctly collected in the receptacle 6a, which now is collected in the receptacle 6b, together with other fractions that fall into said receptacle 6b by mistake (which are obviously considerably smaller than those of the first sorting).

If the treated forage is alfalfa and if the receptacle 6 is the receptacle that, according to the adjustment of the air stream and of other process parameters, is meant to receive a sorting fraction with fragments of the plant that in theory should have a grammage substantially between 300 g/m² and 400 g/m², this receptacle should collect thin stalks together with stems of leaves and large and older leaves, but actually the fraction that collects in the part 6a is composed of fragments of the plant with grammages substantially between 200 g/m² and 500 g/m², i.e., composed of stems propelled by leaves, by leaves braked by stalks, and by thin stalks with leaf stems.

By adjusting appropriately the parameters of the second sorting section, it is possible to separate most of the forage parts that have a grammage of less than 300 g/m² and more than 400 g/m² and collect in the part 6b a mixture of parts of forage, particularly of alfalfa, that can be used directly as product for zootechnical feeding. Said product is in fact composed, for more than 50%, of very thin stalks and/or stems of leaves and, for the remaining part, of the larger and older leaves of the plants. This product is an excellent natural differentiated protein product, for example, for feeding rabbits but also other animal species.

In practice it has been found that the sorting method and apparatus according to the invention fully achieve the intended aim and objects, since they allow to break up forage plants, particularly alfalfa, into their various components precisely and in an economically convenient manner, making it possible and convenient to produce, in particular, highly specific natural zootechnical fodders that are a valid alternative to the products of the fodder industry.

The sorting method and apparatus thus conceived are susceptible of numerous modifications and variations, all of which are within the scope of the inventive concept; moreover, all the details may be replaced with other technically equivalent elements.

In practice, the materials used, as well as the dimensions, may be any according to requirements and to the state of the art.

The disclosures in Italian Patent Application no. MI2001A002651, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A method for breaking up forage plants, particularly alfalfa, into their component parts, **characterized in that** it comprises:
-- a step for calibrated shredding of the forage plants in order to divide the forage plants into fragments of preset length, which are substantially composed of a component part (stalks or leaves) of the plants or two or more component parts of the plants (stalks and leaves);
-- a first step of pneumatic sorting for breaking up said fragments, and any parts that separate from them, into separate sorting fractions that differ according to their grammage;
-- a second step of pneumatic sorting, in which at least one of the sorting fractions produced by said first sorting step and containing fragments that have an intermediate grammage as well as fragments that have grammages other than said intermediate grammage, is subjected to pneumatic sorting in order to break up said sorting fraction into the parts that compose it with sorting parameters that can be diversified with respect to the sorting parameters used in said first sorting step.

2. The method according to claim 1, **characterized in that** said first pneumatic sorting step and said second pneumatic sorting step are performed in a same pneumatic sorting apparatus divided into at least two treatment sections, a first treatment section being fed with the forage to be subjected to first sorting, a second treatment section being fed with the forage to be subjected to second sorting.

3. The method according to claim 1, **characterized in that** said calibrated length is substantially comprised between one and three times the average width of the forage leaves subjected to shredding.

4. The method according to one or more of the preceding claims, **characterized in that** the forage, before said shredding step or before said first sorting step, is subjected to at least partial dehydration.

5. A sorting apparatus for breaking up forage plants, particularly alfalfa, into their components, comprising a pneumatic sorting apparatus which comprises a substantially horizontal tunnel which has, in an upward region, at least one inlet for introducing the forage in fragments of calibrated length and, in a downward region, a bottom in which there are multiple receptacles for collecting the sorting fractions of the forage fragments introduced in said tunnel, means for delivering a stream of air in a substantially horizontal direction along said tunnel below said inlet for a differentiated fall, as a function of their grammage, of the forage fragments into said receptacles, which are spaced one another along a direction that is substantially parallel to the direction of said air stream, **characterized in that** the region of said tunnel that lies above said receptacles is divided into at least two sections that are arranged side by side parallel to the direction of said air stream, respectively a first sorting section and a second sorting section, each one of said two sections being provided with a corresponding inlet, at least one of said receptacles being divided into at least two parts, respectively at least one first part located below said first sorting section and at least one second part located below said second sorting section; the first part of said at least one receptacle being connected to the inlet of said second sorting section in order to convey the forage fraction collected in said first part of the receptacle into said second sorting section.

6. The sorting apparatus according to claim 5, **characterized in that** baffles are arranged between said receptacles and can be moved on command along a direction that is substantially parallel to the direction of said air stream in order to vary the position of the opening of said receptacles along said direction that is substantially parallel to the direction of said air stream.

7. The sorting apparatus according to claims 5 and 6, **characterized in that** each one of said baffles is divided into two parts, respectively a first part arranged below said first sorting section and a second part arranged below said second sorting section, both of said parts being movable on command independently of each other along a direction that is substantially parallel to the direction of said air stream.

8. The sorting apparatus according to one or more of the preceding claims, **characterized in that** on the bottom of said receptacles there are screw feeders for extracting the parts of forage that fall into said receptacles, the screw feeder arranged in said at least one receptacle being divided into two parts, respectively a part located in said first part of the receptacle and a part located in said second part of the receptacle, said screw feeder parts having opposite helixes in order to extract, on opposite sides, the forage parts that fall into said two parts of said at least one receptacle.

9. A product based on alfalfa for zootechnical feeding, **characterized in that** it comprises a balanced mixture of stalks of alfalfa and leaves of alfalfa, said stalks being present in a percentage greater than 50%.

10. The product according to claim 9, **characterized in that** said stalks and said leaves have a grammage substantially comprised between 300 g/m² and 400 g/m².

11. The product according to claims 9 and 10, **characterized in that** it is obtained by separating the parts that compose the alfalfa plants with the sorting method and/or apparatus according to one or more of the preceding claims.

12. A sorting' method and apparatus for breaking up forage plants, particularly alfalfa, into their component parts, and a product for zootechnical feeding, **characterized in that** they comprise one or more of the described and/or illustrated characteristics.
